# EUROPEAN PATENT APPLICATION

(11) **EP 4 170 578 A1**
(43) Date of publication of application: **26.04.2023**
(21) Application number: 21825204.7
(22) Date of filing: 15.04.2021
(51) Int. Cl.: G06Q 50/26

(54) **CUSTOMS WORK ASSISTANCE DEVICE, CUSTOMS WORK ASSISTANCE METHOD AND RECORDING MEDIUM HAVING CUSTOMS WORK ASSISTANCE PROGRAM STORED THEREON**

(30) Priority: 17.06.2020 JP 2020104412
(71) Applicant: NEC Platforms, Ltd., Kanagawa 213-8511 (JP)
(72) Inventor: KAWABE, Koichi, Kawasaki-shi, Kanagawa 213-8511 (JP)
(74) Representative: Betten & Resch
(86) International application number: PCT/JP2021/015537
(87) International publication number: WO 2021/256070

(57) **Abstract**

A customs work assistance device is provided with an acquisition unit for acquiring purchase information, which represents a purchase record of an article overseas by a subject, and a determination unit for determining whether bringing the article into the country is allowed, and determining taxation details in regard to the subject, on the basis of the purchase information and a prescribed standard. Thus, it is possible to assist in simplifying and accurately carrying out the customs work of carrying out a confirmation regarding an article brought into the country from overseas.

## Description

### [Technical Field]

The present invention relates to a customs work assistance device, a customs work assistance method, and a customs work assistance program.

### [Background Art]

Generally, office procedures for tax payment or tax return are often complicated, and errors may occur in office processing, or the time required for office processing may be long. Therefore, a technology for achieving such business processing quickly and accurately is expected.

As a technique related to such a technique, PTL 1 discloses a tax payment method in which a credit card company correctly collects a tax paid by a consumer from a store when the consumer makes a payment using a credit card. In this method, information about a sales amount is received from a user terminal, a tax amount to be paid for the sales is calculated based on the information about the sales amount, and processing for payment of the calculated tax amount is performed as a proxy of a business operator that has transmitted the information about the sales amount.

PTL 2 discloses a refund payment system in which a customer pays a purchase cost of an article or a service at a store in a foreign country and a refund target amount to be refunded later with a settlement card, and then performs the refund. In the store, the system reads necessary information from the settlement card and the refund card issued from the management company regarding the registered person same as that of the settlement card and recording the information necessary for refund. This system sends a sales amount of an article or a service and a refund target amount to a settlement card company. In this system, the settlement card company performs a process of withdrawing the total amount of the sales amount and the management fee of the management company from the account designated by the customer based on the settlement card data, the sales amount of the article or service, and the refund target amount data. Then, this system deposits a management fee to the management company.

PTL 3 discloses a billing system for a credit card company to take care of payment of a consumption tax for a company. This system searches for part of personal information of a user based on a credit card number used when credit card payment is made in electronic commerce, and determines a country of residence of the user. This system calculates a value added tax to be paid by each consumer, adds the value added tax to the price of the purchased goods/services, and charges the consumer. Then, the system allows the credit card company to directly pay the tax agency in each country to be originally paid without delivering the collected value added tax to the seller's business company.

### [Citation List]

### [Patent Literature]

[PTL 1] JP 2003-346068 A
[PTL 2] JP 2004-62496 A
[PTL 3] JP 2007-157095 A

### [Summary of Invention]

### [Technical Problem]

At customs, the operation is performed to check whether there is an article prohibited from being brought into the country among articles that were purchased at a destination by a traveler who has returned from overseas and brought into the country, whether the article is subject to tax, and the like. This operation is performed based on a report or the like prepared by the traveler, but for example, there is a case where the traveler himself/herself does not recognize whether the article is an article that falls within the exemption range, and in such a case, it is necessary for customs staff members to individually handle the case. As described above, since the checking operation at the customs is complicated, there is a possibility that overlooking of the article prohibited from being brought into the subject's country, omission of report of the article subject to tax, or the like may occur. Therefore, it is required to simplify and accurately perform the checking operation on the article to be brought into the subject's country from overseas at such customs. PTLs 1 to 3 described above do not particularly mention such a problem.

It is a main object of the present invention to provide a customs work assistance device or the like that assists in simplifying and accurately performing the checking operation at customs on an article to be brought into the subject's country from overseas.

### [Solution to Problem]

A customs work assistance device according to an aspect of the present invention includes an acquisition means configured to acquire purchase information indicating a purchase record of an article purchased overseas by a subject, and a determination means configured to determine whether the article is allowed to be brought into the subject's country and a content of tax imposed on the subject based on the purchase information and a predetermined criterion.

In another viewpoint of achieving the above object, a customs work assistance method according to an aspect of the present invention includes, by an information processing device, acquiring purchase information indicating a purchase record of an article purchased overseas by a subject, and determining whether the article is allowed to be brought into the subject's country and a content of tax imposed on the subject based on the purchase information and a predetermined criterion.

From a still another viewpoint of achieving the above object, a customs work assistance program according to an aspect of the present invention causes a computer to execute an acquisition process of acquiring purchase information indicating a purchase record of an article purchased overseas by a subject, and a determination process of determining whether the article is allowed to be brought into the subject's country and a content of tax imposed on the subject based on the purchase information and a predetermined criterion.

Furthermore, the present invention can also be achieved by a computer-readable nonvolatile recording medium storing the customs work assistance program (computer program).

### [Advantageous Effects of Invention]

According to the present invention, it is possible to obtain a customs work assistance device or the like that assists in simplifying and accurately performing the checking operation at customs on an article to be brought into the subject's country from overseas.

### [Brief Description of Drawings]

Fig. 1 is a block diagram illustrating a configuration of a customs work assistance system 1 according to a first example embodiment of the present invention.
Fig. 2A is a flowchart (1/2) illustrating the operation of the customs work assistance system 1 according to the first example embodiment of the present invention.
Fig. 2B is a flowchart (2/2) illustrating the operation of the customs work assistance system 1 according to the first example embodiment of the present invention.
Fig. 3 is a block diagram illustrating a configuration of a customs work assistance device 40 according to a second example embodiment of the present invention.
Fig. 4 is a block diagram illustrating a configuration of an information processing device 900 capable of achieving the customs work assistance device according to each example embodiment of the present invention.

### [Example Embodiment]

Hereinafter, example embodiments of the present invention will be described in detail with reference to the drawings.

### <First example embodiment>

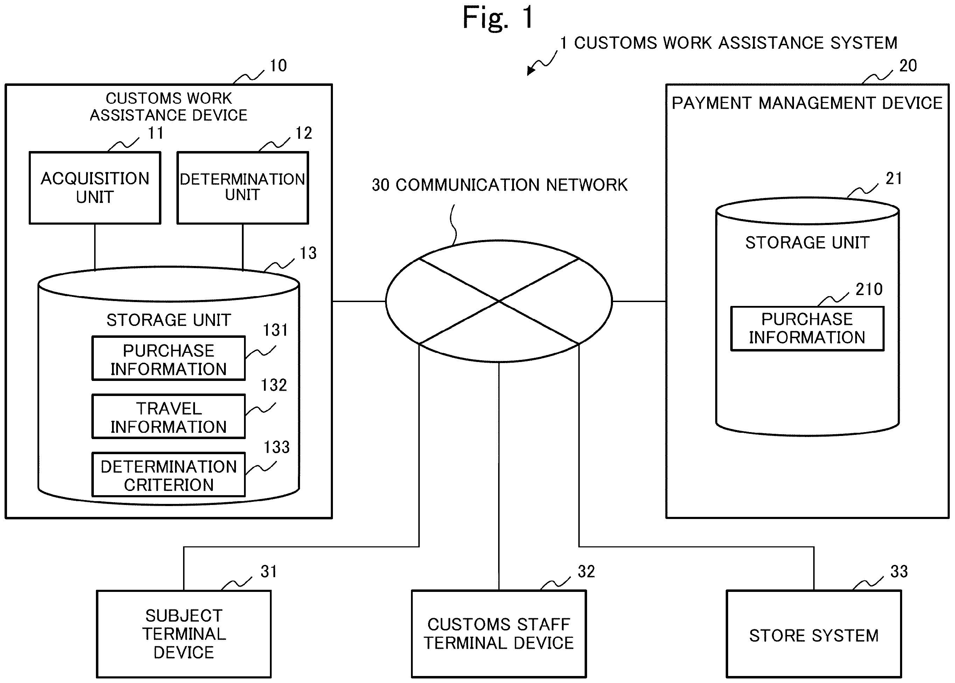

Fig. 1 is a block diagram illustrating a configuration of a customs work assistance system 1 according to a first embodiment of the present invention. In the customs work assistance system 1, a customs work assistance device 10, a payment management device 20, a subject terminal device 31, a customs staff terminal device 32, and a store system 33 are communicably connected via a communication network 30. The communication network 30 is, for example, the Internet or a communication network including the Internet and an intranet.

The customs work assistance device 10 is an information processing device such as a server, for example, that assists a checking operation on an article that a subject (traveler) brings from overseas into the subject's country, where the checking operation is performed by customs at an international airport or the like. The payment management device 20 is an information processing device such as a server, for example, that manages a purchase record in cashless payment by a subject in a business operator providing a cashless payment service. The cashless payment includes, for example, payment by a credit card or bar code payment using a smartphone. The customs work assistance system 1 may include a plurality of payment management devices related to a plurality of business operators that provide cashless payment services.

The subject terminal device 31 is an information processing device used by the subject such as a smartphone, a tablet, or a personal computer, for example. The subject terminal device 31 receives an input operation of the subject when the subject inputs information to the customs work assistance device 10 or the like. The subject terminal device 31 also displays information output from the customs work assistance device 10 or the like on the display screen. That is, the subject terminal device 31 is an example of a display device. The subject terminal device 31 may also be used as a smartphone that executes barcode payment.

The customs staff terminal device 32 is an information processing device, such as a smartphone, a tablet, or a personal computer, used by a customs staff member. When a customs staff member inputs information to the customs work assistance device 10 or the like, the customs staff terminal device 32 accepts an input operation of the customs staff member. The customs staff terminal device 32 also displays information output from the customs work assistance device 10 or the like on the display screen. That is, the customs staff terminal device 32 is an example of a display device.

The store system 33 is, for example, a point of sales (POS) system that processes cashless payment at a store at a destination of the subject. The store system 33 transmits payment information about the cashless payment to the payment management device 20.

The payment management device 20 stores the payment information, as a purchase information 210, received from the store system 33 in a storage unit 21 included therein. The storage unit 21 is, for example, a storage device such as a memory or a hard disk. The purchase information 210 is information in which, for example, an identifier capable of identifying the subject, an identifier capable of identifying the store, a purchase date and time of the article, an identifier capable of identifying the article, the number of articles, and the price of the article are associated with each other.

The identifier capable of identifying the subject in the purchase information 210 is, for example, a credit card number of the subject, an identification (ID) for bar code payment, or the like. The identifier capable of identifying the subject may include the name and the passport number of the subject. The identifier that can identify the store in the purchase information 210 is, for example, a name of the store, a store code assigned to the store, or the like. The identifier that can identify the article in the purchase information 210 is, for example, a name of the article, an article code assigned to the article, or the like.

The customs work assistance device 10 includes an acquisition unit 11, a determination unit 12, and a storage unit 13. The acquisition unit 11 and the determination unit 12 are an example of an acquisition means and a determination means, respectively.

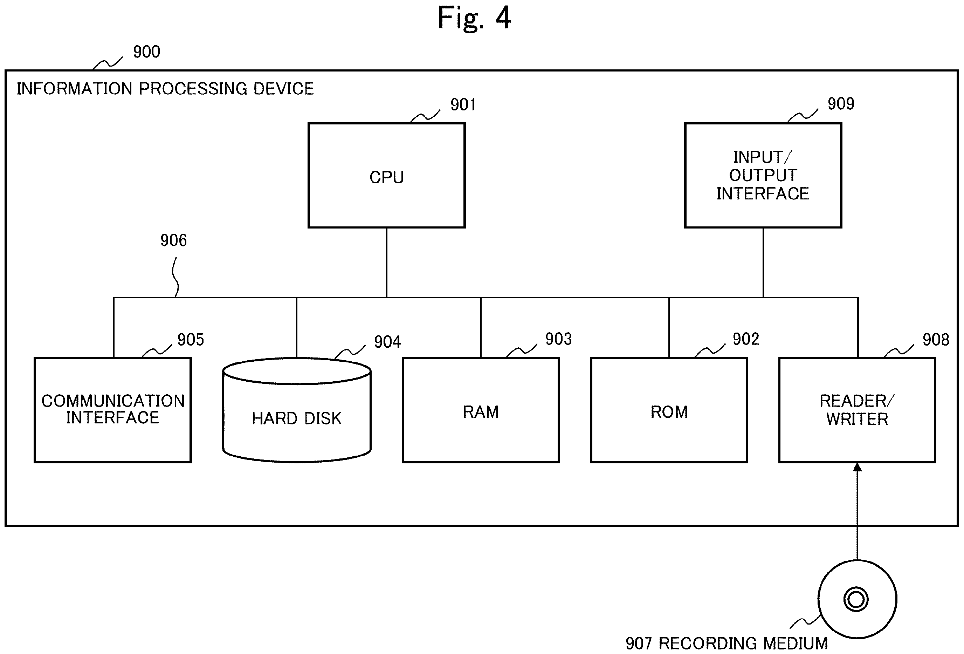

The storage unit 13 is, for example, a storage device such as a random access memory (RAM) 903 or a hard disk 904 illustrated in Fig. 4 to be described later. The storage unit 13 stores purchase information 131, travel information 132, and a determination criterion 133. Details of these pieces of information stored in the storage unit 13 will be described later.

The acquisition unit 11 acquires the travel information 132 input by an input operation on the subject terminal device 31 by the subject, and stores the travel information 132 in the storage unit 13. The acquisition unit 11 may acquire the travel information 132, for example, at the timing when the input operation is performed by the subject. The subject shall perform the input operation at the latest before the checking operation at customs upon returning home is performed. The travel information 132 indicates a travel record of the subject traveled overseas, and is information in which at least an identifier capable of identifying the subject, an identifier capable of identifying a travel destination, and a travel period are associated.

The identifier capable of identifying the subject in the travel information 132 is, for example, a name and a passport number of the subject. Note that, in a case where the purchase information 210 described above does not include the passport number of the subject as the identifier capable of identifying the subject, the travel information 132 also includes the credit card number of the subject or the ID for barcode payment in such a way that the subject can be associated with the purchase information 210.

At customs, the customs staff member checks the passport number of the subject who has returned from the destination, and performs an operation to input the passport number to the customs staff terminal device 32. At this time, the acquisition unit 11 acquires the passport number from the customs staff terminal device 32.

The acquisition unit 11 extracts the current travel record of the subject from the travel information 132 based on the acquired passport number of the subject. The current travel record includes, for example, a travel destination and a travel period regarding the current travel. Then, the acquisition unit 11 collates the passport number of the subject and the current travel record with the purchase information 210 stored in the storage unit 21 of the payment management device 20, thereby extracting the purchase record of the article of the subject in the current travel from the purchase information 210. The acquisition unit 11 stores the extracted purchase record of the articles of the subject during the current travel in the storage unit 13 as the purchase information 131.

Note that, in a case where the subject consumes the article purchased at the destination at the destination, more specifically, for example, in a case where the article is food and the subject eats or drinks the article at the destination, it is necessary to delete information about the article from the purchase information 131. In such a case, for example, when the subject returns home, an input operation for deleting the article consumed by the subject at the destination from the purchase information 131 is performed on the subject terminal device 31 or the customs staff terminal device 32 at customs. Then, the acquisition unit 11 updates the purchase information 131 based on the information input by the input operation.

Purchase information about an article purchased by the subject by cash (also referred to as cash payment) at a destination is not included in the purchase information 210 indicating purchase information about an article purchased by cashless payment. In such a case, for example, when the subject returns home, an input operation for adding an article purchased by the subject by cash payment at the destination to the purchase information 131 is performed on the subject terminal device 31 or the customs staff terminal device 32 at the customs. Then, the acquisition unit 11 updates the purchase information 131 based on the information input by the input operation.

Based on the purchase information 131 and the determination criterion 133 (which is an example of a predetermined criterion), the determination unit 12 determines whether an article purchased by a subject at a destination is allowed to be brought into the subject's country, and a content of tax imposed on the subject. The determination unit 12 displays the determination result together with the list of the articles indicated by the purchase information 131 on the display screen of at least one of the subject terminal device 31 and the customs staff terminal device 32.

The determination criterion 133 includes, for example, information indicating a list of identifiers of the articles prohibited from being brought into the subject's country (also referred to as carry-prohibited articles). When among the identifiers of the articles indicated by the purchase information 131, there is an identifier that matches the identifier of the carry-prohibited article indicated by the determination criterion 133, the determination unit 12 determines that a carry-prohibited article is present among the articles purchased by the subject at the destination.

The determination criterion 133 also includes information indicating the amount of exemption (also referred to as an exemption range) for each article, and a calculation criterion of a taxed amount of money related to the article according to the amount of the article in a case where the amount of the articles exceeds the exemption range. The calculation criterion includes, for example, a calculation formula of a taxed amount of money expressed using a tax rate for each article. When the amount of the articles indicated by the purchase information 131 exceeds the exemption range, the determination unit 12 calculates the taxed amount of money based on the calculation criterion.

Note that the list of the articles indicated by the purchase information 131 displayed on the display screen of at least one of the subject terminal device 31 and the customs staff terminal device 32 may not match the actual articles presented by the subject to the customs staff at the custom by the determination unit 12. This is caused by, for example, omission of correction to the purchase information 131 by the subject. In this case, an input operation for correcting the purchase information 131 is performed on the subject terminal device 31 or the customs staff terminal device 32. Then, based on the corrected purchase information 131 and the determination criterion 133, the determination unit 12 determines whether the article purchased by the subject at the destination is allowed to be brought into the subject's country and the content of tax imposed on the subject.

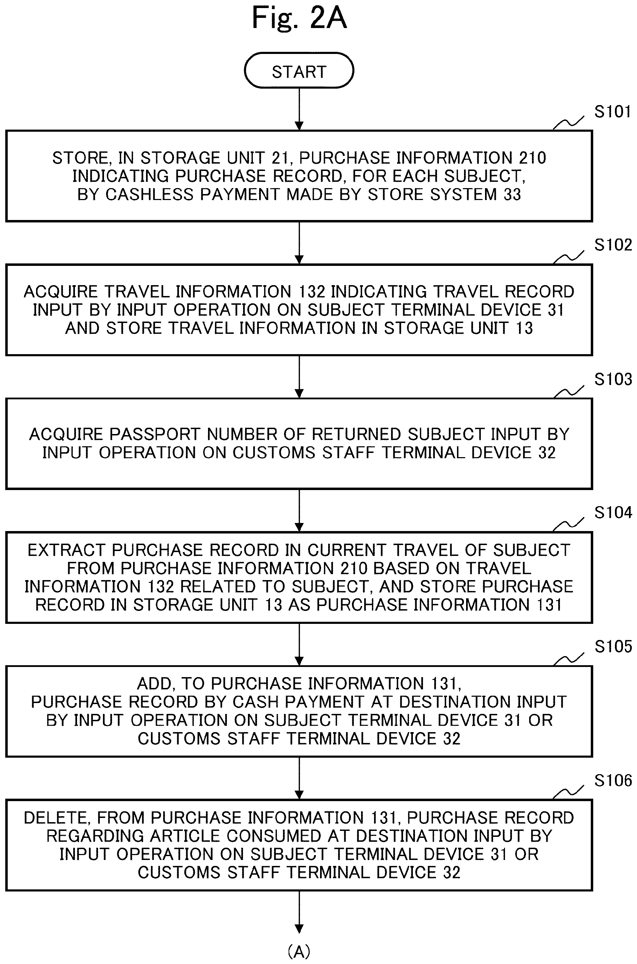

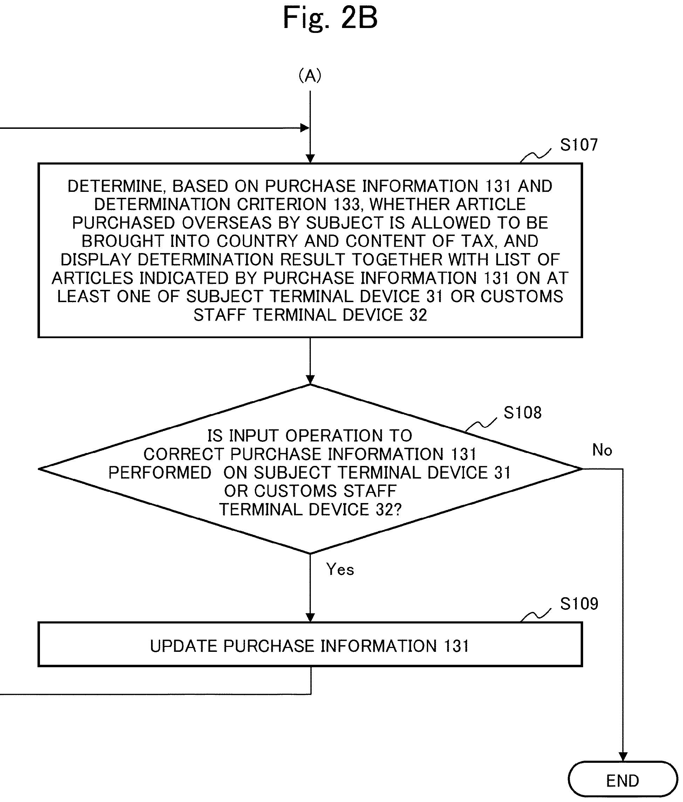

Next, with reference to the flowcharts of Figs. 2A and 2B, the operation (processing) of the customs work assistance system 1 according to the present example embodiment will be described in detail.

The payment management device 20 stores, in the storage unit 21, the purchase information 210 indicating the purchase record, for each subject, by cashless payment by the store system 33 at the destination of the subject (step S101). The acquisition unit 11 in the customs work assistance device 10 acquires the travel information 132 indicating the travel record input by the input operation on the subject terminal device 31 to store the travel information in the storage unit 13 (step S102).

The acquisition unit 11 acquires the passport number, of the returned subject, input by the input operation on the customs staff terminal device 32 (step S103). The acquisition unit 11 extracts a purchase record in the current travel of the subject from the purchase information 210 based on the travel information 132 about the subject, and stores the purchase record as the purchase information 131 in the storage unit 13 (step S104).

The acquisition unit 11 adds, to the purchase information 131, the purchase record, by cash payment at the destination, input by the input operation on the subject terminal device 31 or the customs staff terminal device 32 (step S105). The acquisition unit 11 deletes, from the purchase information 131, a purchase record regarding an article, consumed at a destination, input by an input operation on the subject terminal device 31 or the customs staff terminal device 32 (step S106). However, the order of the processes in steps S105 and S106 is not fixed.

The determination unit 12, based on the purchase information 131 and the determination criterion 133, determines whether the article purchased overseas by the subject is allowed to be brought into the country and the content of tax, and displays the determination result together with the list of the articles indicated by the purchase information 131 on at least one of the subject terminal device 31 and the customs staff terminal device 32 (step S107).

When an input operation for correcting the purchase information 131 is performed on the subject terminal device 31 or the customs staff terminal device 32 (Yes in step S108), the acquisition unit 11 updates the purchase information 131 based on the information input by the input operation (step S109), and the process returns to step S107. When the input operation for correcting the purchase information 131 is not performed on the subject terminal device 31 or the customs staff terminal device 32 (No in step S108), the entire process ends.

The customs work assistance device 10 according to the present example embodiment can assist in simplifying and accurately performing the checking operation at customs on an article to be brought into the subject's country from overseas. This is because the customs work assistance device 10 determines, based on the purchase information 131 indicating the purchase record of an article purchased overseas by the subject and the determination criterion 133, whether the article is allowed to be brought into the subject's country and the content of tax imposed on the subject.

Hereinafter, effects achieved by the customs work assistance device 10 according to the present example embodiment will be described in detail.

At customs, the operation is performed to check whether there is an article prohibited from being brought into the country among articles that were purchased at a destination by a traveler who has returned from overseas and brought into the country, whether the article is subject to tax, and the like. This operation is performed based on a report or the like prepared by the traveler, but for example, there is a case where the traveler himself/herself does not recognize whether the article is an article that falls within the exemption range, and in such a case, it is necessary for customs staff members to individually handle the case. As described above, since the checking operation at the customs is complicated, there is a possibility that overlooking of the article prohibited from being brought into the subject's country, omission of report of the article subject to tax, or the like may occur. Therefore, it is required to simplify and accurately perform the checking operation on the article to be brought into the subject's country from overseas at such customs.

In order to solve such a problem, the customs work assistance device 10 according to the present example embodiment includes the acquisition unit 11 and the determination unit 12, and operates as described above with reference to Figs. 1 to 2B, for example. That is, the acquisition unit 11 acquires the purchase information 131 indicating the purchase record of the article purchased overseas by the subject. Then, the determination unit 12 determines, based on the purchase information 131 and the determination criterion 133, whether the article is allowed to be brought into the subject's country and the content of tax imposed on the subject.

That is, the customs work assistance device 10 according to the present example embodiment acquires the purchase information 131 about the article purchased by the subject at the destination, and automatically determines the article prohibited from being brought into the country and the content of tax based on the determination criterion 133. As a result, the customs work assistance device 10 can assist in simplifying and accurately performing the checking operation at customs on an article to be brought into the subject's country from overseas.

The customs work assistance device 10 according to the present example embodiment acquires the purchase information 210 from the payment management device 20 that manages a purchase record by cashless payment. That is, the customs work assistance device 10 can easily acquire the purchase information 131 without requiring development of a function of acquiring the purchase information 131 by using the purchase record, by the subject, managed by the cashless payment business operator.

The customs work assistance device 10 according to the present example embodiment adds a purchase record by cash payment to the purchase information 131, the purchase record being input by an input operation of the subject. That is, by acquiring a purchase record by cash payment that is not included in a purchase record, by cashless payment, acquired from the payment management device 20, the customs work assistance device 10 can assist in simplifying and accurately performing the checking operation at customs on an article to be brought into the subject's country from overseas.

The customs work assistance device 10 may assist the checking operation at customs without using the travel information 132 registered by the subject. In this case, the acquisition unit 11 periodically acquires the purchase information 210 from the payment management device 20, for example. The acquisition unit 11 extracts a purchase record of the articles overseas for each subject from the acquired purchase information 210. Then, the determination unit 12 determines, based on the purchase record of the article overseas for each subject extracted by the acquisition unit 11, the presence or absence of an article prohibited from being brought into the country and the content of tax. As a result, for example, even in a case where the subject does not register the travel information 132 in order to conceal an illicit purchase of an article overseas, the customs work assistance device 10 can reliably grasp an article brought from overseas by the subject.

Note that the object to be assisted by the customs work assistance device 10 according to the present example embodiment is not limited to an operation of checking, at customs at an international airport or the like, an article to be brought into the subject's country by a subject who has returned from a destination. The customs work assistance device 10 may assist, for example, an operation of checking the content declared by the subject to customs regarding an article individually imported from overseas. In this case as well, the customs work assistance device 10 may acquire purchase information about cashless payment made when the subject individually imports the article.

### <Second example embodiment>

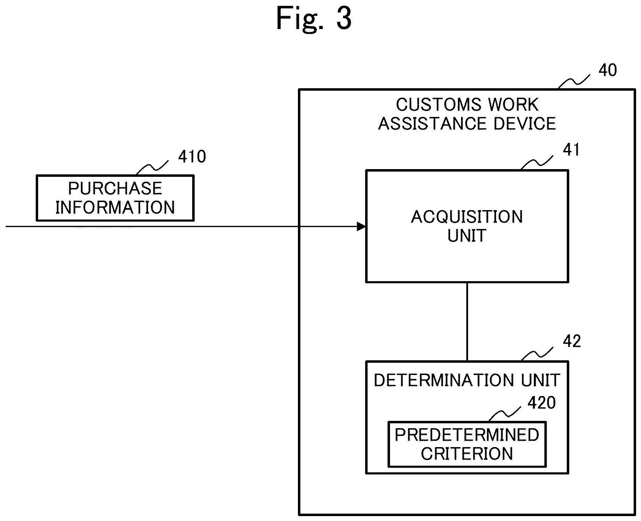

Fig. 3 is a block diagram illustrating a configuration of a customs work assistance device 40 according to a second example embodiment of the present invention.

The customs work assistance device 40 according to the present example embodiment includes an acquisition unit 41 and a determination unit 42. The acquisition unit 41 and the determination unit 42 are an example of an acquisition means and a determination means, respectively.

The acquisition unit 41 acquires purchase information 410 indicating a purchase record of the article purchased overseas by the subject. For example, the acquisition unit 41 may acquire the purchase information 410 from a device such as the payment management device 20 according to the first example embodiment. The purchase information 410 is, for example, information such as the purchase information 210 according to the first example embodiment. Then, as in the acquisition unit 11 according to the first example embodiment, the acquisition unit 41 may extract, from the purchase information 410, the purchase record of the article purchased by the subject in the current travel from the acquired purchase information 410, and may use the extracted result as the purchase information 410.

The determination unit 42 determines, based on the purchase information 410 and a predetermined criterion 420, whether the article is allowed to be brought into the subject's country and the content of tax imposed on the subject. The predetermined criterion 420 is, for example, a criterion such as the determination criterion 133 according to the first example embodiment. For example, as in the determination unit 12 according to the first example embodiment, the determination unit 42 determines whether there is a carry-prohibited article among the articles purchased by the subject at the destination, and calculates the taxed amount of money when the amount of the articles to be carried in exceeds the exemption range.

The customs work assistance device 40 according to the present example embodiment can assist in simplifying and accurately performing the checking operation at customs on an article to be brought into the subject's country from overseas. This is because the customs work assistance device 40 determines whether the article is allowed to be brought into the subject's country and the content of tax imposed on the subject based on the purchase information 410 indicating the purchase record of the article purchased overseas by the subject and the predetermined criterion 420.

### <Hardware configuration example>

Each unit in the customs work assistance device illustrated in Figs. 1 and 3 in each of the above-described example embodiments can be achieved by dedicated hardware (HW) (electronic circuit). In Figs. 1 and 3, at least the following configuration can be regarded as a function (processing) unit (software module) of a software program including an instruction executed by a processor.
- The acquisition units 11 and 41,
- The determination units 12 and 42,
- Storage control function in the storage unit 13.

The division of each unit illustrated in these drawings is a configuration for convenience of description, and various configurations can be assumed at the time of implementation. An example of a hardware environment in this case will be described with reference to Fig. 4.

Fig. 4 is a diagram exemplarily describing a configuration of the information processing device 900 (computer) capable of achieving the customs work assistance device according to each example embodiment of the present invention. That is, Fig. 4 illustrates a configuration of a computer (information processing device) capable of achieving the customs work assistance device illustrated in Figs. 1 and 3, and illustrates a hardware environment capable of achieving each function in the above-described example embodiment.

The information processing device 900 illustrated in Fig. 4 includes the following components as constituent elements.
- A central processing unit (CPU) 901,
- A read only memory (ROM) 902,
- A random access memory (RAM) 903,
- A hard disk (storage device) 904,
- A communication interface 905,
- A bus 906 (communication line),
- A reader/writer 908 capable of reading and writing data stored in a recording medium 907 such as a compact disc read only memory (CD-ROM),
- An input/output interface 909 such as a monitor, a speaker, or a keyboard.

That is, the information processing device 900 including the above-described components is a general computer to which these components are connected via the bus 906. The information processing device 900 may include a plurality of CPUs 901 or may include a CPU 901 configured by a plurality of cores.

Then, the present invention described using the above-described example embodiment as an example supplies a computer program capable of achieving the following functions to the information processing device 900 illustrated in Fig. 4. The functions are the above-described configuration in the block configuration diagram (Figs. 1 and 3) referred to in the description of the example embodiment or the functions of the flowchart (Figs. 2A and 2B). Thereafter, the present invention is achieved by reading, interpreting, and executing the computer program on the CPU 901 of the hardware. The computer program supplied into the device may be stored in a readable/writable volatile memory (RAM 903) or a non-volatile storage device such as the ROM 902 or the hard disk 904.

In the above case, a general procedure can be used at present as a method of supplying the computer program into the hardware. Examples of the procedure include a method of installing the program in the apparatus via various recording media 907 such as a CD-ROM, a method of downloading the program from the outside via a communication line such as the Internet, and the like. In such a case, the present invention can be understood to be configured by a code constituting the computer program or the recording medium 907 storing the code.

The present invention is described above using the above-described example embodiments as exemplary examples. However, the present invention is not limited to the above-described example embodiments. That is, the present invention can have various aspects that can be understood by those of ordinary skill in the art within the scope of the present invention.

This application is based upon and claims the benefit of priority from Japanese patent application No. 2020-104412, filed on June 17, 2020, the disclosure of which is incorporated herein in its entirety by reference.

### [Reference signs List]

- 1: customs work assistance system
- 10: customs work assistance device
- 11: acquisition unit
- 12: determination unit
- 13: storage unit
- 131: purchase information
- 132: travel information
- 133: determination criterion
- 20: payment management device
- 21: storage unit
- 210: purchase information
- 30: communication network
- 31: subject terminal device
- 32: customs staff terminal device
- 33: store system
- 40: customs work assistance device
- 41: acquisition unit
- 410: purchase information
- 42: determination unit
- 420: predetermined criterion
- 900: information processing device
- 901: CPU
- 902: ROM
- 903: RAM
- 904: hard disk (storage device)
- 905: communication interface
- 906: bus
- 907: recording medium
- 908: reader/writer
- 909: input/output interface

## Claims

1. A customs work assistance device comprising:
an acquisition means configured to acquire purchase information indicating a purchase record of an article purchased overseas by a subject; and
a determination means configured to determine whether the article is allowed to be brought into the subject's country and a content of tax imposed on the subject based on the purchase information and a predetermined criterion.

2. The customs work assistance device according to claim 1, wherein
the acquisition means acquires the purchase information from a payment management device that manages the purchase record by cashless payment.

3. The customs work assistance device according to claim 1, wherein
the acquisition means acquires the purchase information indicating the purchase record by cash payment, the purchase record being input by an input operation of the subject.

4. The customs work assistance device according to any one of claims 1 to 3, wherein
the acquisition means acquires travel information indicating a travel record of the subject traveled overseas, and acquires the purchase information based on the travel information.

5. The customs work assistance device according to claim 4, wherein
the travel information indicates a travel period of the subject traveled overseas,
the purchase information indicates a date and time when the article is purchased, and
the acquisition means acquires the purchase information indicating the purchase record of the article purchased in the travel period.

6. The customs work assistance device according to claim 4 or 5, wherein
the travel information and the purchase information include a passport number of the subject.

7. The customs work assistance device according to any one of claims 1 to 6, wherein
the determination means displays, on a display device, a list of the article indicated by the purchase information, and a determination result regarding whether the article is allowed to be brought into the subject's country and the content of tax imposed on the subject.

8. The customs work assistance device according to any one of claims 1 to 7, wherein
the acquisition means acquires the purchase information indicating the purchase record changed by an input operation of the subject, and
the determination means determines again whether the article is allowed to be brought into the subject's country and the content of tax imposed on the subject based on the changed purchase record.

9. A customs work assistance method comprising:
by an information processing device,
acquiring purchase information indicating a purchase record of an article purchased overseas by a subject; and
determining whether the article is allowed to be brought into the subject's country and a content of tax imposed on the subject based on the purchase information and a predetermined criterion.

10. A recording medium storing a customs work assistance program for causing a computer to execute:
an acquisition process of acquiring purchase information indicating a purchase record of an article purchased overseas by a subject; and
a determination process of determining whether the article is allowed to be brought into the subject's country and a content of tax imposed on the subject based on the purchase information and a predetermined criterion.
